**Europäisches Patentamt**

**European Patent Office**

**Office européen des brevets**

(19)

(11) Veröffentlichungsnummer : **0 402 868 B1**

(12)

# EUROPÄISCHE PATENTSCHRIFT

(45) Veröffentlichungstag der Patentschrift :
**20.12.95 Patentblatt 95/51**

(51) Int. Cl.⁶ : **G06K 9/48,** G06K 9/64

(21) Anmeldenummer : **90111116.1**

(22) Anmeldetag : **12.06.90**

(54) **Verfahren zur Erkennung von vorab lokalisierten, in digitalen Grauwertbildern vorliegenden Zeichen, insbesondere zum Erkennen von in Metalloberflächen eingeschlagenen Zeichen**

(30) Priorität : **16.06.89 DE 3919831**

(43) Veröffentlichungstag der Anmeldung :
**19.12.90 Patentblatt 90/51**

(45) Bekanntmachung des Hinweises auf die
Patenterteilung :
**20.12.95 Patentblatt 95/51**

(84) Benannte Vertragsstaaten :
**BE DE ES FR GB IT NL SE**

(56) Entgegenhaltungen :
**PROCEEDINGS OF THE 6TH SCANDINAVIAN
CONFERENCE ON IMAGE ANALYSIS Bd. 1,
19. Juni 1989, OULU, FINLAND Seiten 577 -
584; EVERS, C. AND KÄMMERER B.: 'Recognition of punched characters on workpieces by
matching of gradients with thin reference patterns'
SYSTEMS, COMPUTERS, CONTROLS. Bd. 10,
Nr. 2, März 1979, WASHINGTON US Seiten 29 -
38; M. YASUDA: 'An Improved Correlation Method for Character Recognition'
PATENT ABSTRACTS OF JAPAN vol. 13, no.
35 (P-818)26. Januar 1989**

(73) Patentinhaber : **SIEMENS
AKTIENGESELLSCHAFT
Wittelsbacherplatz 2
D-80333 München (DE)**

(72) Erfinder : **Evers, Christian, Dipl.-Math.
Rossinistrasse 9
D-8011 Baldham (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In der industriellen Fertigung werden Produkte häufig mit Beschriftungen versehen, die der Kennzeichnung des Produkts dienen. Derartige Kennzeichnungen betreffen beispielsweise Angaben über Warennummer, Hersteller und Ausführungsart.

Beschriftungen durch Farbauftrag (Stempel) sind oft zu empfindlich, da sie durch Kratzer, Rost oder Fremdfarbe (Lackierung) leicht unlesbar werden. Geprägte Beschriftungen erweisen sich als beständiger und werden beispielsweise in der Automobilfabrikation häufig verwendet. Man unterscheidet bei Prägezeichen zwischen gestanzten oder eingeschlagenen und erhaben geprägten Beschriftungen.

Obwohl ein Barcode leichter als derartige Zeichen automatisch gelesen werden kann, findet er selten Anwendung, da die Kennzeichnungen auch für den Menschen ohne Schwierigkeiten lesbar sein sollen. Im Zuge der Automatisierung von Produktionsprozessen besteht deshalb ein großes Interesse an einem Verfahren zum Erkennen von geprägten Schriftzeichen.

Die Schriftzeichenerkennung (Optical Character Recognition, OCR) ist ein relativ altes Forschungsgebiet der Mustererkennung in der digitalen Bildverarbeitung. Lesegeräte werden beispielsweise schon in Banken und bei der Post verwendet vergl. z. B. Ullmann, J. R.: Picture Analysis in Character Recognition in: Digital Picture Analysis, Editor: A. Rosenfeld, Springer 1976, p. 295-343. Sie stellen unterschiedliche Anforderungen an das zu lesende Schriftbild und das Text-Layout. Gemeinsam ist ihnen jedoch, daß sie Schriftzeichen erwarten, die sich in ihrer Farbe oder Helligkeit deutlich vom Bildhintergrund unterscheiden.

Diese Voraussetzung ist bei in Werkstücken eingeprägten Zeichen im allgemeinen nicht erfüllt. Abhängig von der Prägungsart, der Beleuchtung, dem Oberflächenmaterial und einer möglichen Verschmutzung des Werkstückes hebt sich die Beschriftung hier nicht durch ein konstantes Merkmal vom Hintergrund ab. Es steht folglich kein Binärbild sondern ein digitales Grauwertbild zur Verfügung, und bekannte Verfahren für die Schriftzeichenerkennung sind nicht verwendbar.

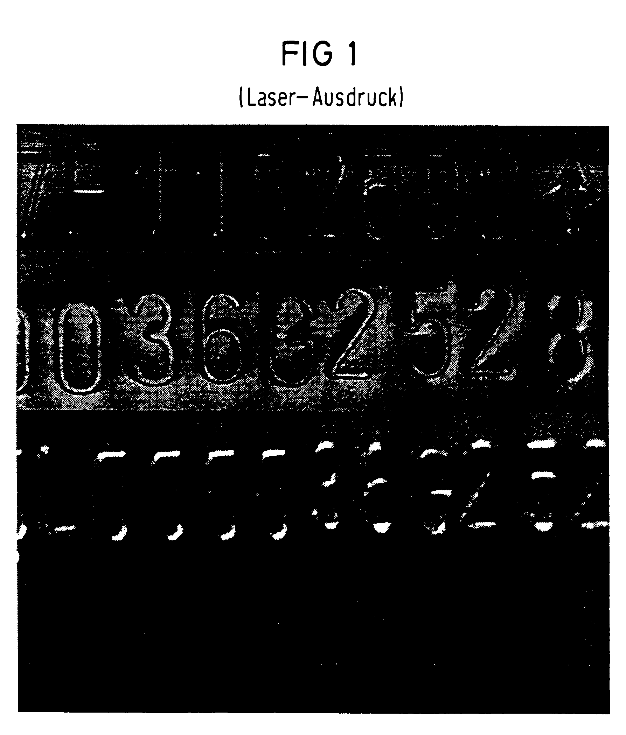

Fig. 1 zeigt Ausschnitte aus Grauwertbildern von gestanzten Schriftzeichen, die unter unterschiedlichen Beleuchtungsbedingungen aufgenommen wurden.

Dem Vorgang einer Schriftzeichenerkennung in Grauwertbildern liegen zwei Teilaufgaben zugrunde, nämlich

1. eine Segmentierung zum Bestimmen, an welchen Orten Shriftzeichen im Bild vorliegen und

2. eine Klassifikation: Es sei ein Rechteck, in dem vermutlich ein Schriftzeichen steht, aus dem Bild extrahiert. Danach ist zu bestimmen, welches Zeichen vorliegt oder ob ggf. eine Fehlsegmentierung ausgeführt wurde.

In den Druckschriften Hongo, Y., Komuro, A.: Stamped Character Apparatus Based on the Bit Matrix Method, Proc. 6th ICPR, München, 1982, p. 448-450, DE-OS 3 203 897 und Langer, W.: Segmentierung von Schriftzeichen in Grauwertbildern, Diplomarbeit, TU Braunschweig, Inst. für Elektrotechnik, 1988 sind vollständige Systeme zur Zeichensegmentierung und -erkennung in Grauwertbildern angegeben. Alle drei Systeme verwenden Verfahren, die zunächst das Grauwertbild in ein Schwarz-Weiß-Bild wandeln und dann die Segmentierung und Erkennung ausführen.

Hongo und Komuro binarisieren das Originalbild durch Setzen einer Grauwertschwelle und erwarten dann Schriftzeichen von flächiger Struktur, ggf. mit kleinen Störflecken. Letztere werden dann durch Bewertung ihrer Größe eliminiert. Das Verfahren ist zum Erkennen von geprägten Zeichen ohne zusätzlichen Farbauftrag nicht geeignet. Es funktioniert jedoch beispielsweise für Autokennzeichen und beschriftete Tastaturen. Das Gleiche gilt für das Verfahren, das in DE-OS 3 203 897 offenbart ist.

Langer segmentiert die Zeichen ebenfalls im binarisierten Bild, wobei er allerdings im Falle von unklarer Klassifikation alternative Segmentierungen vorschlägt. Die binarisierten und segmentierten Zeichen werden vorverarbeitet, um flächige Muster zu erzeugen. Zur Klassifikation wird ein Verfahren der CGK (Computer Gesellschaft Konstanz) verwendet, das flächige binäre Zeichen erkennt. Hauptproblem bei Langer ist die von der Bildvorlage abhängige Wahl der Parameter und der Teilschritte zur Bildvorverarbeitung. Zudem verlangt die Klassifikation der CGK eine exakte Segmentierung der binarisierten Zeichen in ein Rechteck. Bei einem Auftreten von Störflecken kann dies nicht in jedem Fall garantiert werden.

In EP 0 217 118 A 2 ist ein Verfahren zur Segmentierung von Wafernummern aus Grauwertbildern offenbart. Gemäß diesem Verfahren wird zunächst das Originalbild "geglättet" und dann anhand einer globalen Schwelle in ein Schwarz-Weiß-Bild gewandelt. Mittels eines Einpaß-Verfahrens werden die Zusammenhangskomponenten in einfachen Polygonzügen ("Deskriptoren") codiert. Für jeden Polygonzug werden die maximalen Ausdehnungen berechnet und anhand der sich ergebenden Werte kleine Störelemente beseitigt. Nicht beschrieben sind eine Einzelzeichensegmentierung und eine Klassifikation. Die sehr schmale Prägung der Wafernummern erleichtert die Segmentierung wesentlich, da die Zeichen selbst keinen Helligkeitsschwankungen unterliegen (keine Reflexionen). Eine Bildglättung ist ohne solch spezieles Vorwissen über das Bild im

2

allgemeinen nicht empfehlenswert, da zusätzlich zu den Störungen auch für die Klassifikation wichtige Merkmale verloren gehen können.

In der Druckschrift Holder, S., Dengler, J.: Font- and Sizeinvariant Character Recognition with Greyvalue Image Features. Proc. 9th ICPR, Rom, 1988, ist ein Verfahren zur Klassifikation von Schriftzeichen aus "DNA-Sequenzen" beschrieben. Diese Sequenzen bestehen aus den Buchstaben "A", "C", "G" und "T" und werden meist in sehr kleiner Schrift und schlechter Druckqualität bei variablem Zeichensatz in Fachzeitschriften abgedruckt. Das Verfahren verwendet das Gradientbild des digitalisierten Grauwertbildes zur Gewinnung der Merkmale, da eine gute Binarisierung aufgrund der schlechten Vorlagequalität im allgemeinen nicht durch Setzen einer Grauwertschwelle erreicht werden kann. Die Gradientenrichtungen und deren Richtungsänderungen im Konturverlauf der vorgelegten Buchstaben werden in ein Histogramm eingetragen. Das Histogramm wird mit Referenzhistogrammen der vier Buchstaben verglichen, die vorab anhand von Musterbuchstaben aus verschiedenen Zeichensätzen erstellt werden. Das Verfahren arbeitet größeninvariant und nahezu unabhängig vom Zeichensatz der Vorlage. Ein Verfahren zur Segmentierung ist nicht beschribeen. Der verwendete Algorithmus eignet sich nicht für gestanzte Schriftzeichen, da bei diesen die wichtige Information über Richtungsänderungen der Gradienten im Konturverlauf der Zeichen nicht zuverlässig vorliegt. So könnte beispielsweise ein "L" nicht lediglich anhand des Gradientenhistogrammes von einem "T" unterschieden werden.

Die Verwendung einer Streuungsfunktion zur Verteilung der Erwartung bestimmter Kantenrichtungen an eine Umgebung des jeweiligen Bildpunktes ist bekannt Abstract von JP-A-63-233 487).

Der vorliegenden Erfindung liegt die Aufgabe zugrunde, ein Verfahren zur Klassifikation von vorab lokalisierten, in Grauwertbildern vorliegenden Zeichen zu schaffen, das geeignet ist, zuverlässig in Werkstücke gestanzte ocer eingeschlagene oder erhaben auf Werkstücken ausgebildete Zeichen unter beliebigen Beleuchtungsbedingungen zu erkennen.

Zur Lösung dieser Aufgabe wird ein Verfahren der eingangs genannten Art vorgeschlagen, das erfindungsgemäß durch die Merkmale des Patentanspruchs 1 bestimmt ist.

Vorteilhafte Weiterbildungen der Erfindung sind durch die in den Unteransprüchen angegebenen Merkmale gekennzeichnet.

Im folgenden wird die Erfindung anhand mehrerer Figuren im einzelnen beschrieben.

Fig. 1 zeigt Ausschnitte aus Grauwertbildern von gestanzten Schriftzeichen, die unter unterschiedlichen Beleuchtungsbedingungen aufgenommen wurden, als Laser-Ausdruck.

Fig. 2 zeigt Beispiele für Referenzzeichen für die Ziffer "9" als Laser-Ausdruck.

Fig. 3 zeigt einen Satz von 35 Referenzzeichen, die in ein vorgegebenes Referenzformat transformiert sind, als Laser-Ausdruck.

Fig. 4 zeigt Darstellungen verschiedener Klassen von Schwarzpunktanordnungen in Referenzzeichen.

Fig. 5 zeigt Möglichkeiten, Linienpunkten eines Referenzzeichens Richtungen anzuordnen.

Fig. 6 zeigt die acht möglichen Richtungen der Punkte eines Referenzzeichens nach der Richtungsdefinition gemäß Fig. 5.

Fig. 7 zeigt als Laser-Ausdruck das Referenzzeichen für die Ziffer"9".

Fig. 8 zeigt als Laser-Ausdruck die erstellten Bewertungsmatrizen für das in Fig. 7 dargestellte Referenzzeichen.

Fig. 9 zeigt ein segmentiertes Grauwertbild der Ziffer "5" als Laser-Ausdruck.

Fig. 10 zeigt das mittels einer sog. Robinson-Maske gefilterte Zeichen gemäß Fig. 9 als Laser-Ausdruck.

Fig. 11 zeigt das binarisierte Gradientenbild des gemäß Fig. 10. gewonnenen, herausgefilterten Zeichens als Laser-Ausdruck.

Fig. 12 zeigt das auf 24*40 Pixel verkleinerte Zeichenbild gemäß Fig. 11 als Laser-Ausdruck.

Fig. 13, Fig. 14 und Fig. 15 zeigen jeweils Beispielergebnisse der Zeichenerkennung, wobei als Referenzzeichen die in Fig. 3 dargestellten Zeichen verwendet wurden, als Laser-Ausdrucke.

Bevor die Zeichenerkennungseinrichtung für Erkennungsaufgaben genutzt werden kann, muß sie in einer Lernphase trainiert werden. In dieser Lernphase wird dem System der zu lernende Zeichensatz vorgelegt. Der typische Umfang eines solchen Zeichensatzes liegt zwischen fünf und 35 verschiedenen Zeichen. Häufig bestehen die Zeichen nur aus Ziffern (also maximal 10 Zeichen). Für jedes Zeichen werden automatisch "Bewertungsmatrizen" erzeugt, die abgespeichert und im folgenden in einer Erkennungsphase genutzt werden.

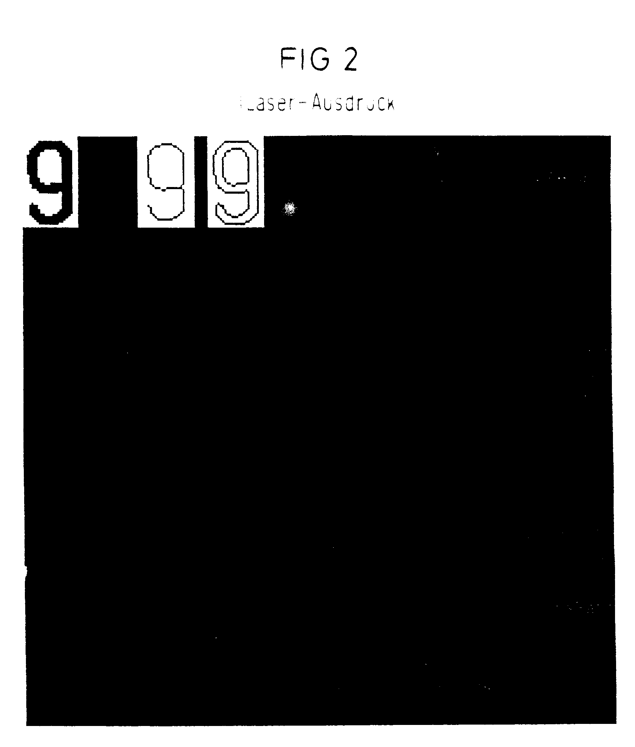

Als Referenzeichen zum "Training" der Zeichenerkennungseinrichtung werden linienhafte Bilder des Stanzstempels verwendet. Hierbei sollte der Prägerand des Stempels dargestellt sein. Fig. 2 zeigt Beispiele für Referenzzeichen der Ziffer "9". In der Mitte ist ein Referenzzeichen für einen sehr schmalen, rechts für einen breiteren Stanzstempel dargestellt.

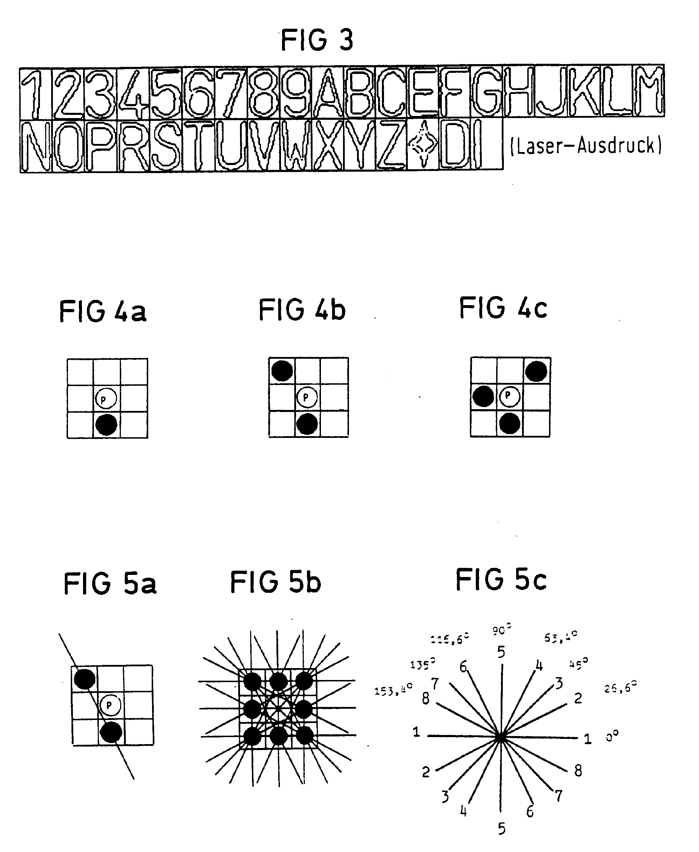

Die Referenzzeichen müssen vom Benutzer der Einrichtung erzeugt werden. Dies kann mit Hilfe eines einfachen CAD-systems, eines Lichtgriffels oder mit parametrischer Eingabe geschehen. Es ist jedoch auch möglich, eine Zeichnung anzufertigen und diese dann zu digitalisieren. Die linienhaften Referenzen gemäß Fig. 2 wurden z. B. aus dem links in der Figur abgebildeten Binärbild gewonnen. Alle Referenzzeichen werden von der Einrichtung auf das gleiche Format "RefBreite∗RefHöhe" transformiert. Einen Satz von 35 Referenzzeichen im Format 24∗40 Pixel zeigt Fig. 3.

Die Referenzzeichen liegen in Binärbildern vor (nur bestehend aus schwarzen und weißen Punkten). Um die Linien der Referenzzeichen auf minimale Breite ("Ein-Pixel-Breite") zu verdünnen, wird ein Verdünnungsverfahren angewendet. Eine Definition des Begriffs "dünn" und einige Verdünnungsverfahren sind in dem Buch Pavlidis, Th.: Algorithms for Graphics and Image Processing, Springer 1982, p. 195-214 enthalten. Die verdünnten Referenzzeichen werden abgespeichert. Die schwarzen Punkte (P), vgl. Fig. 4, der Referenzen lassen sich nun in drei Klassen einteilen:

a) Endpunkte (ein schwarzer Nachbarpunkt in einer 3x3-Umgebung),

b) Linienpunkte (genau zwei schwarze Nachbarpunkte) und

c) Verzweigungspunkte (mehr als zwei schwarze Nachbarpunkte), vergl. Fig. 4.

Den Punkten des Referenzzeichens wird eine Kantenrichtung zugewiesen. Dazu sind verschiedene Methoden anwendbar.

Eine Möglichkeit, den Linienpunkten eines Referenzzeichens eine Richtung zuzuweisen, ist in Fig. 5 dargestellt. Fig. 5 zeigt von links nach rechts:

a) Die Richtung der Verbindungsgeraden der Nachbarpunkte ist die P zugeordnete Richtung;

b) die somit möglichen Verbindungsgeraden in einem 3x3-Fenster;

c) die acht möglichen Richtungen mit Numerierung und Angabe der Winkel.

Die Richtungsgeraden erhalten hier keinen Durchlaufsinn - die Richtungen "Nord" und "Süd" sind identisch. End- und Verzweigungspunkte erhalten keine zugeordnete Richtung.

$R_{Ref}$ bezeichne die Auflösung der Richtungsdetektion im Referenzzeichen (im Beispiel von Fig. 5 ist also $R_{Ref} = 8$).

Da die im Referenzzeichen gemessene Kantenrichtung nicht auch im später zur Erkennung vorgelegten Grauwertbild an gleicher Stelle auftreten muß, wird eine Streuungsfunktion verwendet. Sie verteilt die Erwartung bestimmter Kantenrichtungen an eine Umgebung des Punktes, bei dem diese Richtung in der Referenz gemessen wurde.

Die Funktion sei mit d(P, Q) bezeichnet, wobei P ein Punkt im Referenzzeichen sei und Q ein Ort in einer Matrix (Bewertungsmatrix). d(P, Q) soll ungleich Null nur für Q in einer kleinen Umgebung von P sein, und die Werte von d(P, Q) sollen monoton fallen, wenn sich Q von P entfernt.

Ein einfaches Beispiel einer Streuungsfunktion: Gezeigt sind die Werte in einer 9∗9-Umgebung eines Punktes P. Für Q=P wird der Wert d(P, Q)=3 erreicht. Die nicht gezeigten Werte sind als Null definiert.

```
1 1 1 1 1 1 1 1 1
1 1 1 1 1 1 1 1 1
1 1 2 2 2 2 2 1 1
1 1 2 2 2 2 2 1 1
1 1 2 2 3 2 2 1 1
1 1 2 2 2 2 2 1 1
1 1 2 2 2 2 2 1 1
1 1 1 1 1 1 1 1 1
1 1 1 1 1 1 1 1 1
```

(Zur Verwendung der Streuungsfunktion siehe weiter unten.)

Um eine in einem Referenzzeichen gemessene Kantenrichtung $r_{Ref}$ mit einer im Grauwertbild bestimmten Richtung $r_{Vor}$ zu vergleichen, dient eine Winkelvergleichsfunktion $h(r_{Ref}, r_{Vor})$. Bei geringer Winkeldifferenz zwischen den Richtungen soll sie hohe positive Werte, bei starker Winkeldifferenz Null ausgeben.

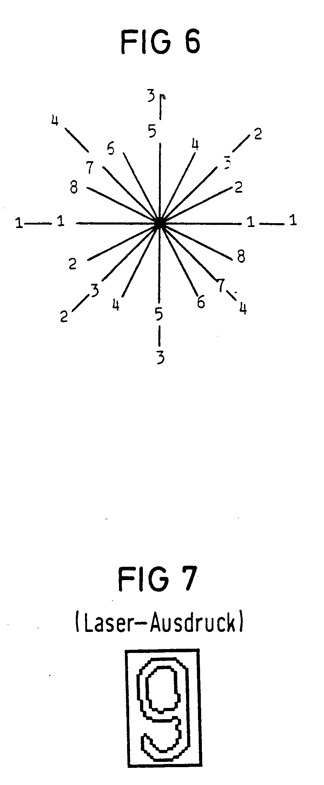

Fig. 6 zeigt die acht möglichen Richtungen der Punkte eines Referenzzeichens gemäß Richtungsdefinition von Fig. 5. Außen sind die vier Richtungen dargestellt, die von einem Kompaß-Gradientenoperator im Grauwertbild bestimmt werden können.

Eine einfache Winkelvergleichsfunktion für diesen speziellen Fall kann dann z. B. definiert werden durch:

$$h(r_{Ref}, r_{Vor}) := \begin{cases} 4, & \text{falls } \sphericalangle (r_{Ref}, r_{Vor}) = 0° \\ 3, & \text{falls } \sphericalangle (r_{Ref}, r_{Vor}) < 45° \\ 1, & \text{falls } \sphericalangle (r_{Ref}, r_{Vor}) = 45° \\ 0, & \text{falls } \sphericalangle (r_{Ref}, r_{Vor}) > 45° \end{cases}$$

Für jedes zu lernende Zeichen und für jede mögliche Kantenrichtung im Grauwertbild wird eine Bewertungsmatrix erstellt.

Beträgt die Richtungsauflösung im Grauwertbild also beispielsweise $R_{Vor}=4$, so werden für jedes zu lernende Zeichen vier Matrizen erstellt. Diese Matrizen sind das eigentliche Ergebnis des gesamten Lernschrittes. Die linienhaften Referenzzeichen werden lediglich für die Erzeugung dieser Matrizen benötigt.

In die Bewertungsmatrizen wird eingetragen, wie eine bestimmte vorgelegte Kantenrichtung bezüglich eines gelernten Zeichens zu bewerten ist. Die Bewertungsmatrix für senkrechte Kantenrichtungen in der Mitte des Rechtecks bei dem Zeichen "1" enthält z. B. einen hohen positiven Wert, bei dem Zeichen "8" jedoch einen negativen.

Die Bewertungsmatrizen werden mit $Bew(Z, r_{Vor})$ bezeichnet, wobei Z ein zu lernendes Zeichen sein. Die Bewertungsmatrizen haben das gleiche Format wie das gelernte Zeichen: RefBreite x RefHöhe. Es bezeichne $W_{Ref}$ den Wertebereich für Punkte eines Rechtecks dieser Größe. C bezeichne eine positive Konstante, die dazu dient, einen Maximalwert für die Bewertungen festzulegen.

Die Bewertungsmatrizen zum Zeichen Z werden nun wie folgt erzeugt:

- Setze $Bew(Z, r_{Vor}, P):=0$ für alle Richtungen $r_{Vor}$ und alle Punkte P,
- Für alle Vordergrundpunkte P des dünnen Ideals zu Z, für alle möglichen $r_{Vor}$ und jeden Punkt Q aus $W_{Ref}$ addiere den Wert $d(P,Q)*h(r_{Ref}, r_{Vor})$ zu $Bew(Z, r_{Vor})$, wobei $r_{Ref}$ die zu P gehörende Richtung sei, (Zur Def. der Funktionen d und h siehe weiter oben.)
- Für alle möglichen $r_{Vor}$ und jeden Punkt Q aus $W_{Ref}$ setze $Bew(Z, r_{Vor}):=MIN (C, Bew(Z, r_{Vor}))$, (MIN=Wahl des Minimums)
- Berechne den Mittelwert über alle Elemente der Bewertungsmatrizen zu Z:

$$\overline{Bew(Z)} := \frac{\sum_{r=1}^{R_{Vor}} \sum_{Q \in W_{Ref}} Bew(Z, r, Q)}{RefBreite \times RefHöhe \times R_{Vor}}$$

- Zur Normierung subtrahiere diesen Mittelwert von allen Elementen der Bewertungsmatrizen von Z.

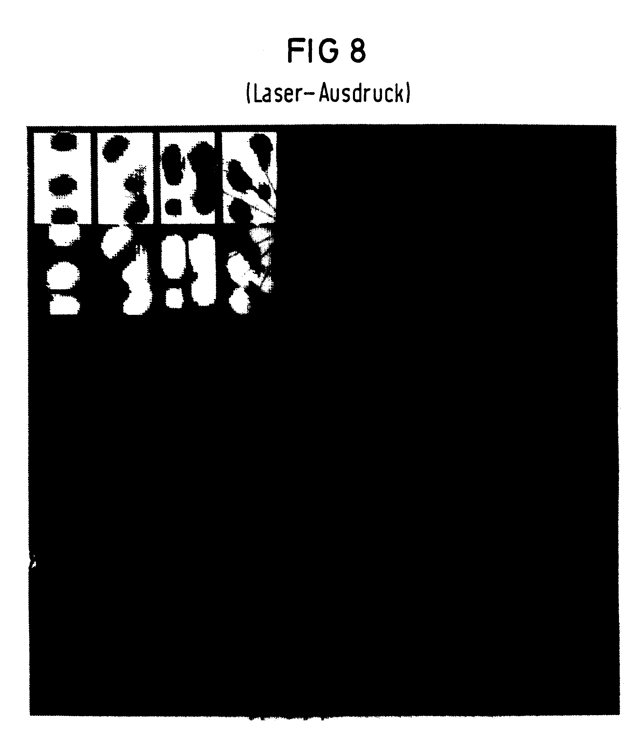

Fig. 8 zeigt die Bewertungsmatrizen für die in Fig. 7 abgebildete Referenz einer "9". Von links nach rechts sind die Bewertungsmatrizen für die Richtungen "Waagerecht", "aufsteigende Diagonale", "Senkrecht" und "abfallende Diagonale" gezeigt. Dunkle Grauwerte entsprechen hohen Bewertungen. Die jeweils obere Matrix zeigt die positiven Elemente der Bewertungsmatrix - negative sind in der oberen Matrix weiß belassen und in die untere Matrix eingetragen.

Die Bewerungsmatrizen wurden mit den in den zuvor beschriebenen beispielhaften Konkretisierungen berechnet, also insbesondere mit RefBreite=24, RefHöhe=40, $R_{Ref}=8$, $R_{Vor}=4$.

Das zu erkennende Zeichen wird in einem aus dem Grauwertbild segmentierten Rechteck vorgelegt. In jedem Punkt dieses Rechtecks wird zunächst mittels eines Gradienten-Filters die Stärke und Richtung einer hier ggf. verlaufenden Grauwertkante berechnet. Da es bei unbekannter Beleuchtungsrichtung nicht vorhersagbar ist, welche Prägekanten im Bild hell und welche dunkel erscheinen, wird dabei die Orientierung der Grauwertkanten ("von Hell zu Dunkel" oder "von Dunkel zu Hell") nicht unterschieden.

Anwendbar sind hier beispielsweise die Kompaß-Gradientenfilter wie in der Druckschrift Wirtz, B.: Untersuchung von Algorithmen zur Kantenerkennung in industriellen Szenen. Diplomarbeit im Fachbereich Informatik an der RWTH Aachen, 1987, dargestellt, also etwa die Kirsch-, Prewitt- oder Robinson-Masken, aber auch die von Wirtz vorgestellten nicht-orthogonalen Masken. Bei Verwendung dieser Verfahren erhält man eine Auflösung von vier Kantenrichtungen. "Senkrecht", "aufsteigende Diagonale", "Waagerecht" und "abfallende Diagonale".

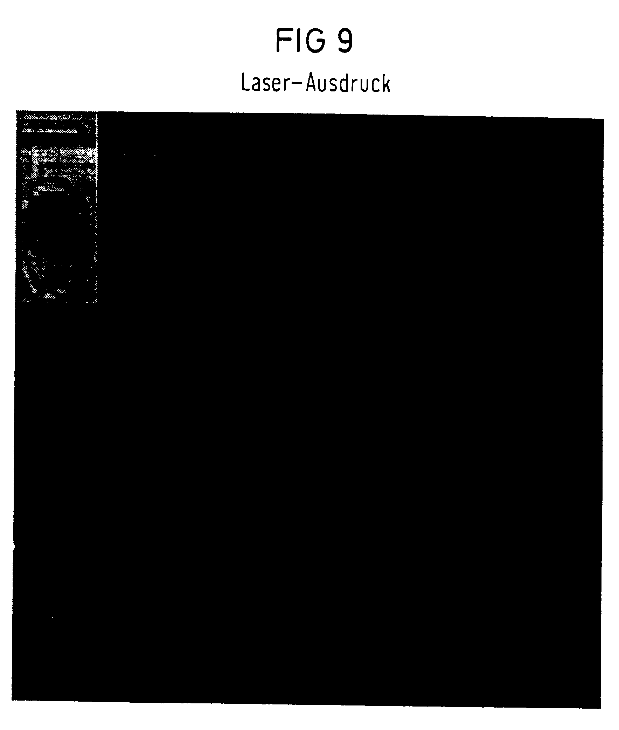

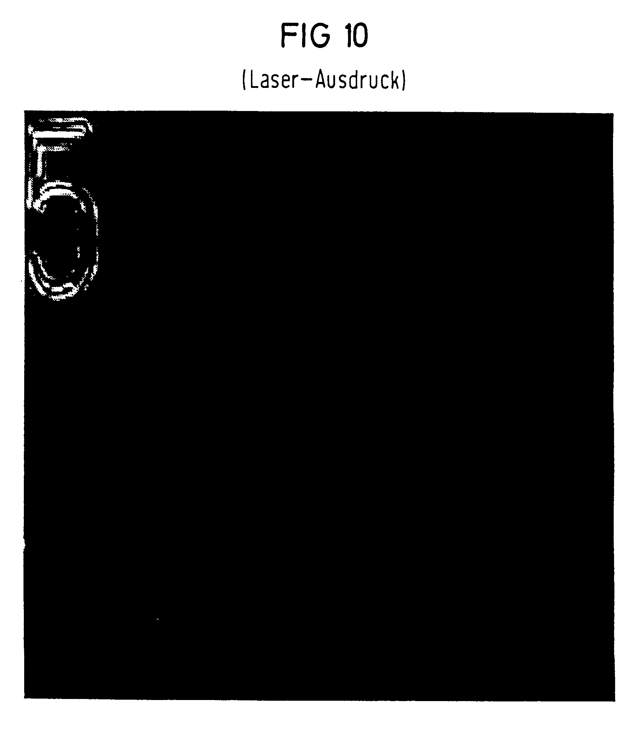

Das mit der Robinson-Maske gefilterte Zeichen gemäß Fig. 9 ist in Fig. 10 dargestellt. Starke Grauwertübergänge im Originalbild sind dabei mit hellen Grauwerten markiert. Die zugeordneten Kantenrichtungen sind nicht dargestellt.

Die Kantenrichtungen werden ab 1 numeriert. Die Auflösung wird mit $R_{Vor}$ bezeichnet.

Eine Verwendung von Gradientenfiltern mit anderer Auflösung als 4 ist möglich.

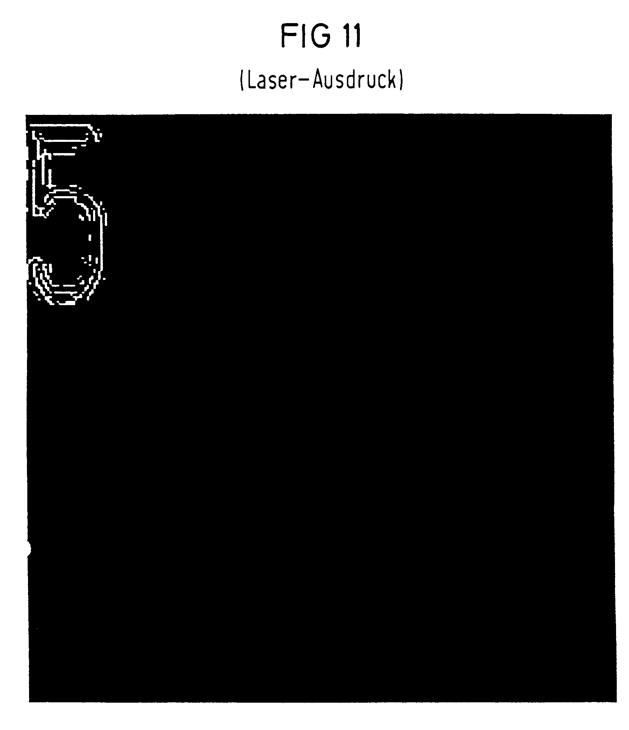

Anschließend wird das Gradientenbild in ein Binärbild transformiert. Punkte mit schwachen Gradientenwerten werden gelöscht. Bei der Binarisierung sind verschiedene Verfahren anwendbar. Fig. 11 zeigt das binarisierte Gradientenbild zu Fig. 10 bei Verwendung einer Binarisierung nach der Druckschrift Chen, B., Siy, P. : Forward/Backward Contour Tracing with Feedback. IEEE PAMI-9, May 1987, p. 438-446. Das Binärbild hat i. a. eine relativ schlechte Qualität, es erscheint insbesondere nicht "flächig", sondern besteht aus kleineren Strichen und Punkten. Es ist daher zur Vorlage bei einem Standard-Zeichenerkennungsverfahren (für Schrift und Papiervorlagen) nicht geeignet.

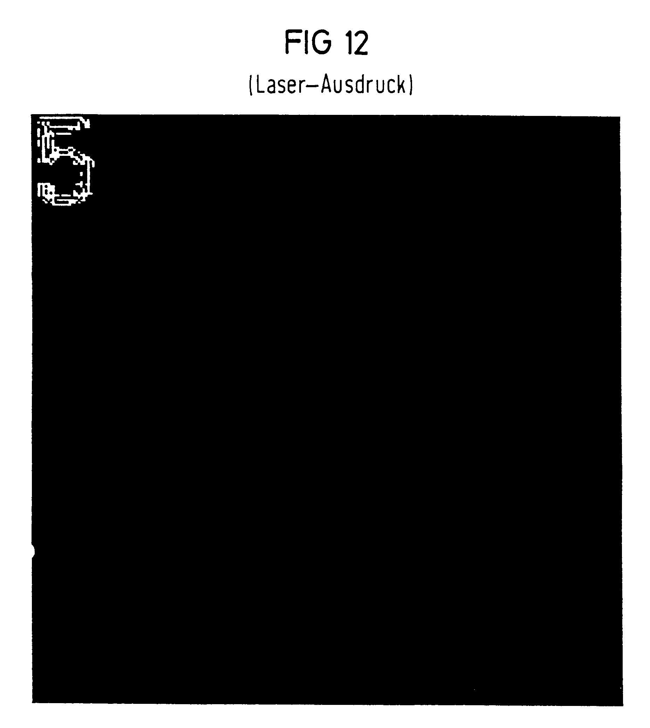

Schließlich wird das binarisierte Gradientenbild noch auf das Format RefBreite*RefHöhe der Referenzzeichen transformiert. Das auf 24*40 Pixel verkleinerte Bild gemäß Fig. 11 zeigt Fig. 12.

Die Vordergrundpunkte tragen dabei weiterhin die Information über ihre zugehörige Kantenrichtung. Es sei V(r,P) gleich 1, wenn im binarisierten Gradientenbild der Punkt P Vordergrundpunkt ist und die Richtung r trägt, andernfalls sei V(r,P) gleich 0.

Zum Vergleich der Vorlage mit einem gelernten Zeichen Z werden alle Bewertungen aufsummiert, die Vordergrundpunkten im binarisierten Gradientenbild entsprechen:

$$Vgl(Z) := \sum_{r=1}^{R_{Vor}} \sum_{P \in W_{Ref}} Bew(Z,r,P) \times V(r,P)$$

Zur Klassifikation wird die Vorlage mit allen gelernten Zeichen verglichen. Dasjenige Referenzzeichen, das den höchsten Vergleichswert ergibt, wird als Ergebniszeichen der Klassifikation bestimmt (Majoritätsentscheidung).

Wesentlicher Vorteil bei diesem Vergleichsverfahren ist, daß man ohne Multiplikationen auskommen kann, da der Faktor V(r,P) lediglich die Werte "0" und "1" annehmen kann. Der Vorgang ist zudem auf entsprechender Hardware einfach parallelisierbar, d. h. zeitlich parallel abwickelbar.

Für den Fall einer Fehlsegmentierung, d. h. daß keines der gelernten Zeichen vorgelegt wurde, oder einer qualitativ sehr schlechten Vorlage wird ein Kriterium zur Rückweisung des Zeichens gebildet (Plausibilitätsprüfung).

Ein Vorlage wird zurückgewiesen, wenn mindestens eine der folgenden zwei Bedingungen erfüllt ist:

1. Der Wert Vgl(B)/AV ist kleiner als eine Schwelle RS1, wobei B das Ergebniszeichen der Klassifikation und AV die Anzahl der Vordergrundpunkte des zugehörigen binarisierten Gradientenbildes seien. (Die durchschnittlich erreichte Bewertung pro Pixel der Vorlage bezüglich des ähnlichsten gelernten Zeichens ist zu gering).

2. Der minimale Abstand der erreichten Bewertung von B zu den anderen Zeichen ist kleiner als eine Schwelle RS2.

Ein mögliches Abstandmaß für Bedingung 2 ist gegeben durch:

$$g(Vgl(A),Vgl(B)) := \frac{|Vgl(A) - Vgl(B)|}{|Vgl(A)| + |Vgl(B)|} \ .$$

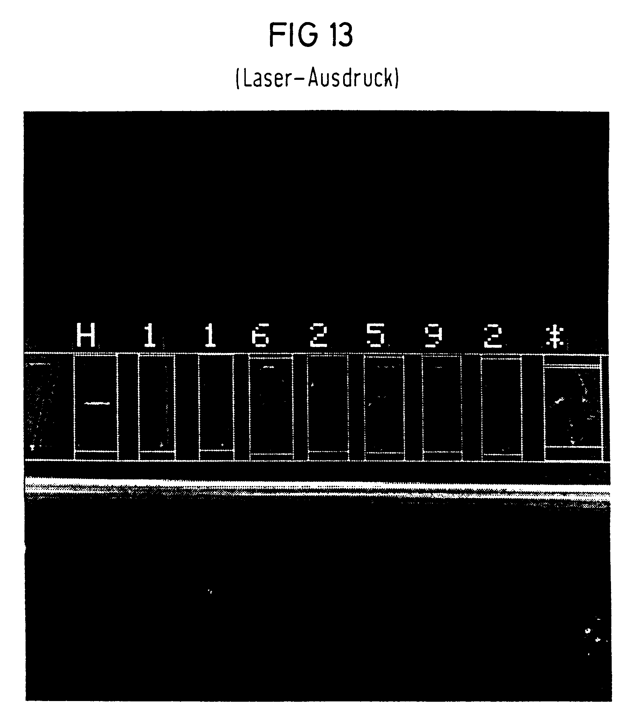

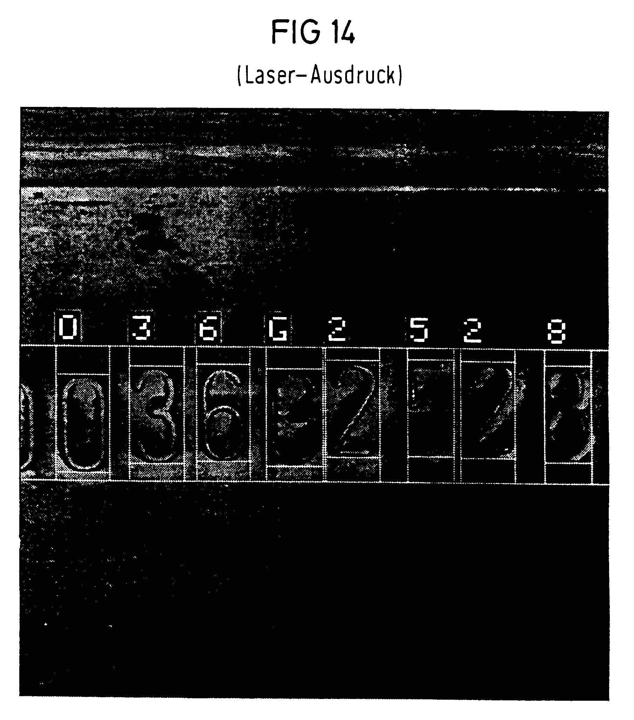

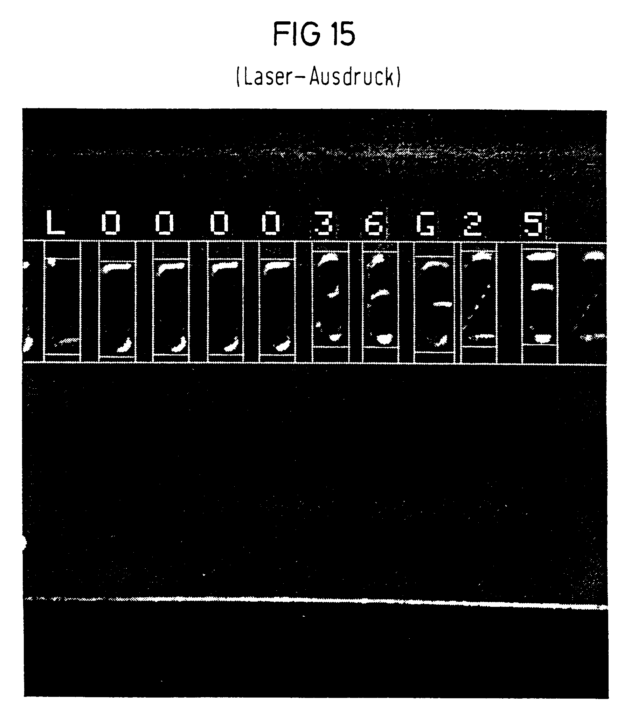

Fig. 13, Fig. 14 und Fig. 15 zeigen Beispielergebnisse der Erkennung. Als Referenzzeichen wurden die in Fig. 3 dargestellten Zeichen verwendet.

Die Zeichen im Grauwertbild wurden automatisch segmentiert. Die zur Erkennung vorgelegten Rechtecke sind umrahmt.

Die Ergebnisse zeigen die Unabhängigkeit der Erkennung von der Beleuchtung, die in den drei Bildern deutlich unterschiedlich ist. Auch sehr ähnliche Zeichen wie "6" und "G" wurden korrekt erkannt.

Abschließend sei bemerkt, daß sich das Verfahren auch zur Erkennung von Druckschriften auf Papiervorlagen eignet, da in Binärbildern wie auch in Grauwertbildern Kantenrichtungen mit Gradientenfiltern bestimmt werden können.

Der beigefügte Programmausdruck enthält Anweisungen zum Training von Referenzzeichen sowie Anweisungen zur Klassifikation in Grauwertbildern segmentierter Zeichen. Die Implementierung erfolgte in "Pascal" auf einer VAX 8700.

**Patentansprüche**

1. Verfahren zum Erkennen von lokalisierten, in digitalen Grauwertbildern vorliegenden Zeichen,

a) bei dem zum Trainieren einer lernfähigen Zeichenerkennungseinrichtung Schritte vorgesehen sind zum

aa) Transformieren von vorliegenden Referenzzeichen auf ein Referenzformat,

ab) Ablegen der transformierten Referenzzeichen in digitaler Form in einem Arbeitsspeicher der Zeichenerkennungseinrichtung,

ac) Zuordnen einer Kantenrichtung zu jedem Bildpunkt eines transformierten Referenzzeichens,

ad) Erstellen von einer Bewertungsmatrix Bew(Z,r) im gleichen Format wie die Referenzzeichen, für jedes Referenzzeichen und jede mögliche Kantenrichtung, welche Bewertungsmatrix zu einer späteren Zuordnung eines zu erkennenden Zeichens zu einem transformierten Referenzzeichen verwendet wird,

wobei Z das transformierte Referenzzeichen beschreibt, für das die Bewertungsmatrix erstellt wird und r die Kantenrichtung bezeichnet, auf die sich die Bewertungsmatrix bezieht und wobei die Bewertungsmatrix die Information enthält, wie die jeweilige Kantenrichtung eines zu erkennenden Zeichens bezüglich des transformierten Referenzzeichens, zu dem die Bewertungsmatrix gehört, an allen sich entsprechenden Bildpunkten zu bewerten ist, wobei

- allen Punkten P, die in einer Bewertungsmatrix eines transformierten Referenzzeichens Z mit der Kantenrichtung r vorkommen, zunächst der Wert 0 zugeordnet wird,

- zu allen Punkten P ein Wert addiert wird, der sich aus der Summe einer Multiplikation eines Werts einer Streuungsfunktion für die Punkte einer Umgebung des Punktes P, einschließlich P, und eines Werts einer Winkelvergleichsfunktion für diese Punkte, für die gesamte Umgebung von P ergibt, wobei durch die Streuungsfunktion die Erwartung bestimmter Kantenrichtungen für einen Punkt an jene Umgebung des jeweiligen Bildpunktes verteilt wird und wobei die Winkelvergleichsfunktion die Kantenrichtungen des transformierten Referenzzeichens und die Kantenrichtungen des zu erkennenden Zeichens, die durch einen zur Vorverarbeitung des zu erkennenden Zeichens verwendeten Gradientenoperator und dessen Richtungsauflösung bestimmt werden, vergleicht,

b) bei dem zum Erkennen des zu erkennenden Zeichens Schritte vorgesehen sind zum

ba) Einlesen des zu erkennenden Zeichens in die Zeichenerkennungseinrichtung,

bb) Vorverarbeiten des zu erkennenden Zeichens, so daß dieses segmentiert und in Graustufen zur Verfügung steht,

bc) Berechnen einer Stärke und einer Richtung einer gegebenenfalls verlaufenden Grauwertkante mittels eines Gradientenfilters,

bd) Vergleichen des Gradientenbildes mit allen durch die Zeichenerkennungseinrichtung gelernten Referenzzeichen nach einem Vergleichskriterium

$$Vgl(Z) := \sum_{r=1}^{R_{Vor}} \sum_{P \in W_{Ref}} Bew(Z, r, P) * V(r, P),$$

wobei Vgl(Z) das Vergleichskriterium bezeichnet und Z ein Referenzzeichen beschreibt, für das das Vergleichskriterium bestimmt wird,

r die jeweilige Kantenrichtung einer Bewegungsmatrix beschreibt,

$R_{Vor}$ die Richtungsauflösung des Gradientenoperators bezeichnet, der zur Berechnung des Gradientenbildes des zu erkennenden Zeichens verwendet wird,

P einen Punkt der Bewertungsmatrix des Referenzzeichens Z mit der Richtung r beschreibt,

$W_{Ref}$ den Wertebereich bezeichnet, in dem die Punkte P liegen können,

Bew(Z,r,P) einen Wert der Bewertungsmatrix des transformierten Referenzzeichens Z mit der Kantenrichtung r für den Punkt P angibt,

V(r,P) eine Funktion mit zwei möglichen Werten 0 und 1 darstellt, wobei der Wert 1 anzeigt, daß der Punkt P ein Vordergrundpunkt in einem binarisierten Gradientenbild ist, und der Wert 0 für alle anderen Möglichkeiten angenommen wird,

wobei das Gradientenbild des zu erkennenden Zeichens auf das Referenzformat transformiert wurde,

be) Durchführen einer Majoritätsentscheidung anhand des Vergleichskriteriums, das den höchsten Vergleichswert ergibt, d. h. dessen zugehöriges Referenzzeichen mit der größten Anzahl von Teilmerkmalen mit dem zu erkennenden Zeichen übereinstimmt, und

7

bf) Erzeugen eines Ergebnissignals aus der Zeichenerkennungseinrichtung.

2. Verfahren nach Anspruch 1,
bei dem die Linien der transformierten Referenzzeichen verdünnt werden, bevor den Bildpunkten Kantenrichtungen zugeordnet werden.

3. Verfahren nach Anspruch 1 oder 2,
bei dem das erzeugte Ergebnissignal einer Plausibilitätsprüfung unterzogen wird und im Falle eines negativen Prüfungsergebnisses ein Signal erzeugt wird, das eine Rückweisung des zu erkennenden Zeichens darstellt.

4. Verfahren nach Anspruch 3,
bei dem die Plausibilitätsprüfung darin besteht, daß ein zu erkennendes Zeichen dann zurückgewiesen wird, wenn mindestens eine der folgenden zwei Bedingungen erfüllt ist:
a) ein Wert Vgl(B)/AV ist kleiner als ein erster Schwellwert (RS1), wobei B ein Ergebniszeichen der Klassifikation repräsentiert, Vgl(B) das Vergleichskriterium für das Ergebniszeichen bezeichnet und AV die Anzahl von Vordergrundpunkten des zugehörigen binarisierten Gradientenbildes ist,
b) ein minimaler Abstand der erreichten Bewertung des Ergebniszeichens B zu anderen Zeichen A ist kleiner als eine zweite Schwelle (RS2).

5. Verfahren nach Anspruch 4,
bei dem ein Maß für den Abstand der Bedingung b) des Anspruches 3 beschrieben wird durch

$$g(Vgl(A),\ Vgl(B)):\ =\ \frac{|\,Vgl(A)\ -\ Vgl(B)\,|}{|\,Vgl(A)\,|\ +\ |\,Vgl(B)\,|}.$$

6. Verfahren nach einem der Ansprüche 1 bis 5, bei dem die Orientierung der Grauwertkanten, "von hell zu dunkel" oder "von dunkel zu hell", nicht unterschieden wird.

7. Verfahren nach einem der Ansprüche 1 bis 6, bei dem in der Vorverarbeitung des zu erkennenden Zeichens das nach der Gradientenfilterung vorliegende Gradientenbild in ein Binärbild transformiert wird und bei dem Bildpunkte mit schwachen Gradientenwerten gelöscht werden.

## Claims

1. Method for recognizing located characters present in digital grey-scale images,
a) in which for the purpose of training an adaptive character recognition device steps are provided for the purpose of
aa) transforming available reference characters to a reference format,
ab) storing the transformed reference characters in digital form in a working memory of the character recognition device,
ac) assigning an edge direction to each pixel of a transformed reference character,
ad) producing an evaluation matrix Bew(Z,r) in the same format as the reference characters, for each reference character and each possible edge direction, which evaluation matrix is used for the purpose of a later assignment of a character to be recognized to a transformed reference character,
Z describing the transformed reference character for which the evaluation matrix is produced and r designating the edge direction to which the evaluation matrix refers, and the evaluation matrix containing the information on how the respective edge direction of a character to be recognized is to be evaluated with respect to the transformed reference character, to which the evaluation matrix belongs, at all mutually corresponding pixels, it being the case that
- the value 0 is initially assigned to all the points P which occur in an evaluation matrix of a transformed reference character Z with the edge direction r,
- a value is added to all the points P which is produced by the sum of a multiplication of a value of a scatter function for the points of an environment of the point P, including P, and a value of an angular comparison function for these points, for the entire environment of P, the scatter function distributing the expectation of specific edge directions for a point to that environment of the respective pixel, and the angular comparison function comparing the edge directions of the transformed reference character and the edge directions of the character to be recognized, which are determined by a gradient operator, used for preprocessing the character to be recognized, and by the directional resolution of said gradient operator, and

b) in which in order to recognize the character to be recognized steps are provided for the purpose of

ba) reading the character to be recognized into the character recognition device,

bb) preprocessing the character to be recognized so that said character is available segmented and in grey levels,

bc) calculating an intensity and a direction of a possibly extending grey-scale edge by means of a gradient filter,

bd) comparing the gradient image with all the reference characters learned by the character recognition device in accordance with a comparison criterion

$$Vgl(Z): \quad = \sum_{r=1}^{R_{Vor}} \sum_{P \in W_{Ref}} Bew(Z, \ r, \ P) \ ^* \ V(r, \ P),$$

Vgl(Z) designating the comparison criterion and Z describing a reference character for which the comparison criterion is determined,

r describing the respective edge direction of an evaluation matrix,

$R_{Vor}$ designating the directional resolution of the gradient operator which is used to calculate the gradient image of the character to be recognized,

P describing a point of the evaluation matrix of the reference character Z having the direction r,

$W_{Ref}$ designating the range of values in which the points P can lie,

Bew(Z, r, P) specifies a value of the evaluation matrix of the transformed reference character Z having the edge direction r for the point P,

V(r, P) representing a function having two possible values 0 and 1, the value 1 indicating that the point P is a foreground point in a binarized gradient image, and the value 0 being assumed for all other possibilities,

the gradient image of the character to be recognized having been transformed to the reference format,

be) carrying out a majority decision with the aid of the comparison criterion which yields the highest comparison value, that is to say whose associated reference character having the greatest number of sub-features coincides with the character to be recognized, and

bf) generating a result signal from the character recognition device.

2. Method according to Claim 1, in which the lines of the transformed reference characters are thinned before the pixels are assigned edge directions.

3. Method according to Claim 1 or 2, in which the generated result signal is subjected to a plausibility check and in the case of a negative check result a signal is generated which represents a rejection of the character to be recognized.

4. Method according to Claim 3, in which the plausibility check consists in that a character to be recognized is rejected whenever at least one of the following two conditions is fulfilled:

a) a value Vgl(B)/AV is smaller than a first threshold value (RS1), B representing a result character of the classification, Vgl(B) designating the comparison criterion for the result character, and AV being the number of foreground points of the associated binarized gradient image,

b) a minimum distance of the achieved evaluation of the result character B from other characters A is smaller than a second threshold (RS2).

5. Method according to Claim 4, in which a measure of the distance of the condition b) of Claim 3 is described by

$$g(Vgl(A), Vgl(B)): \quad = \frac{|Vgl(A) - Vgl(B)|}{|Vgl(A)| + |Vgl(B)|}.$$

6. Method according to one of Claims 1 to 5, in which the orientation of the grey-scale edges "from light to dark" or "from dark to light" is not distinguished.

7. Method according to one of Claims 1 to 6, in which in preprocessing the character to be recognized the gradient image present after the gradient filtering is transformed into a binary image, and in which pixels having weak gradient values are erased.

## Revendications

1. Procédé de reconnaissance de caractères localisés, présents dans des images numériques à niveaux degrés,

a) selon lequel pour l'apprentissage d'un dispositif de reconnaissance de caractères, qui est apte à apprendre, il est prévu des étages pour

aa) transformer des caractères de référence présents en un format de référence,

ab) mémoriser les caractères de référence transformés sous forme numérique dans une mémoire de travail du dispositif de reconnaissance de caractères,

ac) associer une direction de bord à chaque point d'image d'un caractère de référence transformé,

ad) établir une matrice de pondération Bew(Z,r) dans le même format que les caractères de référence, pour chaque caractère de référence et chaque direction possible de bord, laquelle matrice de pondération est utilisée pour une association ultérieure d'un caractère à reconnaître à un caractère de référence transformé,

Z décrivant le caractère de référence transformé, pour lequel on établit la matrice de pondération, et r désignant la direction de bord, à laquelle se rapporte la matrice de pondération, la matrice de pondération contenant l'information, telle que la direction des bords d'un caractère à reconnaître par rapport au caractère de référence transformé, auquel est associée la matrice de pondération, et qui doit être pondérée en tous les points d'image qui se correspondent,

- on associe d'abord la valeur O à tous les points P, qui se présentent dans une matrice de pondération d'un caractère de référence Z transformé, avec la direction de bords r,
- on additionne à tous les points P une valeur, qui est formée de la somme du résultat de la multiplication d'une valeur d'une fonction de dispersion pour les points d'un environnement du point P, y compris P, et d'une valeur d'une fonction de comparaison angulaire pour ces points, pour l'ensemble de l'environnement de P, on répartit l'espérance mathématique de directions déterminées de bords pour un point, au moyen de la fonction de dispersion, sur cet environnement du point d'image, et la fonction de comparaison angulaire compare les directions de bord du caractère de référence transformé et les directions de bord du caractère à reconnaître, que l'on détermine par un opérateur à gradient, utilisé pour le prétraitement du caractère à reconnaître, et par la résolution directionnelle de cet opérateur, et

b) selon lequel pour reconnaître le caractère à reconnaître il est prévu des étages pour

ba) introduire le caractère à reconnaître dans le dispositif de reconnaissance de caractères,

bb) prétraiter le caractère à reconnaître de sorte à le segmenter et à ce qu'il soit à disposition selon des niveaux de gris,

bc) calculer une épaisseur et une direction d'un bord d'une valeur de gris, qui apparaît éventuellement, au moyen d'un filtre à gradient,

bd) comparer l'image de gradient à tous les caractères de référence appris par le dispositif de reconnaissance de caractères selon un critère de comparaison

$$Vgl(Z) := \sum_{r=1}^{R_{Vor}} \sum_{P \in W_{Ref}} Bew(Z,r,P) * V(r,P),$$

Vgl(Z) décrivant le critère de comparaison et Z un caractère de référence, pour lequel on détermine de comparaison,

r désignant la direction du bord d'une matrice de pondération,

$R_{Vor}$ désignant la résolution en direction de l'opérateur à gradient, que l'on utilise pour calculer l'image du gradient du caractère à reconnaître, P un point de la matrice de pondération du caractère de référence Z avec la direction r,

$W_{Ref}$ la plage de valeurs, dans laquelle peuvent se situer les points P,

Bew(Z,r,P) une valeur de la matrice de pondération du caractère de référence transformé Z ayant un bord de direction r pour le point P,

V(r,P) représentant une fonction ayant deux valeurs possibles O et 1, la valeur 1 indiquant que le point P est un point de premier plan dans une image à gradient rendue binaire et la valeur O étant prise pour toutes les autres possibilités,

l'image à gradient du caractère à identifier ayant été amenée par transformation au format de référence,

be) effectuer une prise de décision à la majorité sur la base du critère de comparaison, qui fournit la valeur de comparaison maximale, c'est-à-dire dont le caractère de référence associé coïncide, pour un nombre maximum de caractéristiques partielles, avec le caractère à reconnaître, et

bf) produire un signal de résultat à partir du dispositif de reconnaissance de caractères.

2. Procédé suivant la revendication 1, selon lequel on amincit les traits du caractère de référence transformé avant d'associer des directions de bord aux points d'image.

3. Procédé suivant la revendication 1 ou 2, selon lequel on soumet le résultat produit à un contrôle de vraisemblance et, dans le cas d'un résultat négatif de ce contrôle, on produit un signal, qui représente un rejet du caractère à reconnaître.

4. Procédé suivant la revendication 3, selon lequel le contrôle de vraisemblance consiste à rejeter un caractère reconnu lorsqu'au moins l'une des deux conditions suivantes est satisfaite :

a) une valeur $Vgl(B)/AV$ est inférieure à un premier seuil (RS1), B représentant un caractère de résultat de la classification, $Vgl(B)$ désignant le critère de comparaison pour le caractère de résultat et AV le nombre de points de premier plan de l'image à gradient rndue binaire associée,

b) une distance minimale de la pondération obtenue du caractère de résultat B à d'autres caractères A est inférieure à un second seuil (RS2).

5. Procédé suivant la revendication 4, selon lequel une mesure de la distance de la condition b) de la revendication 4 est décrite par :

$$g(Vgl(A),Vgl(B)): = \frac{\left|Vgl(A) - Vgl(B)\right|}{\left|Vgl(A)\right| + \left|Vgl(B)\right|}$$

6. Procédé suivant l'une des revendications 1 à 5, selon lequel on ne distingue pas l'orientation des bords des valeurs de gris "de clair à sombre" ou "de sombre à clair".

7. Procédé suivant l'une des revendications 1 à 6, selon lequel lors du prétraitement du caractère à reconnaître, on transforme l'image à gradient, qui est présente après le filtrage à gradient, en une image binaire et on efface des points d'image ayant des petites valeurs de gradient.

# FIG 1

(Laser—Ausdruck)

## FIG 2

Laser-Ausdruck

## FIG 3

(Laser-Ausdruck)

## FIG 4a

## FIG 4b

## FIG 4c

## FIG 5a

## FIG 5b

## FIG 5c

# FIG 6

# FIG 7

(Laser–Ausdruck)

# FIG 8

(Laser-Ausdruck)

## FIG 9

### Laser-Ausdruck

# FIG 10

(Laser-Ausdruck)

# FIG 11

(Laser-Ausdruck)

## FIG 12

(Laser—Ausdruck)

# FIG 13

## (Laser-Ausdruck)

# FIG 14

(Laser-Ausdruck)

## FIG 15

(Laser-Ausdruck)